# EUROPEAN PATENT APPLICATION

(11) **EP 1 857 917 A2**
(43) Date of publication of application: **21.11.2007**
(21) Application number: 07075363.7
(22) Date of filing: 08.05.2007
(51) Int. Cl.: G06F 3/048

(54) **Multiple-view display system having user manipulation control and method**

(30) Priority: 15.05.2006 US 434546
(71) Applicant: Delphi Technologies, Inc., Troy, Michigan 48007 (US)
(72) Inventor: Zackschewski, Shawn R., Kokomo IL 46902 (US)
(74) Representative: Denton, Michael John

(57) **Abstract**

A display system (24) and a method (60) of controlling a multiple-view display (25) are provided. The display system (24) includes a display (25) for generating a first image that is viewable within a first viewing window and a second image that is viewable within a second viewing window. The display system (24) also includes a user manipulated input device (40) adapted to allow a user to manually enter an input, and proximity sensors (30 and 32) for sensing which user is manipulating the input device (40). The display system (24) further includes a control device (50) for controlling the first and second images shown on the display (25) based on the sensed user manipulation.

## Description

### Technical Field

The present invention generally relates to electronic display systems and, more particularly, relates to control of a multiple viewing window display to allow ease of user manipulation of inputs.

### Background of the Invention

Automotive vehicles are frequency equipped with various electronic entertainment and information systems and mobile multimedia devices, generally referred to herein as infotainment systems. Infotainment systems include automotive personal computing devices installed in vehicles to allow personal computing, web browsing, accessing e-mail, and other Internet access. Additionally, infotainment systems include navigation systems, DVDs, televisions and video game systems. These and other infotainment systems typically include a human machine interface (HMI) for enabling the user to interface with the system to control various features thereof. The HMI typically includes a display for viewing messages, navigational maps, video images and other information. The HMI also includes input controls for allowing manipulation by a user to input commands to the infotainment system.

Recently, dual-view displays have been developed and proposed for use on vehicles to allow two different image contents to be displayed on the same physical display. The two different images are typically viewable from either the left side or the right side of the display screen. The dual-view display for use in an infotainment system in a vehicle allows the driver of the vehicle to view navigational and other driver relevant content, while allowing a non-driving passenger to view images, such as movies, games, Internet output and other content. Thus, the driver of the vehicle may not be distracted by image content that is not relevant to driving, while at the same time allowing the passenger to view other image content.

In order to interface with a dual-view display, user inputs are typically required for each of the image content displayed. However, this adds to the complexity in dealing with how one user can change the image content in one image while not disrupting the image content in the other image. With a touch sensitive panel screen, a user is able to manipulate input commands simply by touching the panel screen. With a dual-view screen, the display system generally must distinguish the two different image content possibilities from two different users. A particular user would like to select menu operations relevant to the image content displayed in the viewing window presented to that user, while not changing the image content provided to the other viewing window.

Accordingly, it is therefore desirable to provide for a display system that allows for user manipulation of input commands to a dual-view display system such that the input commands can be easily made without adversely affecting image content made available to another user. It is further desirable to provide for such a dual-view display that may be useful in a vehicle, to allow two occupants of the vehicle to manipulate the image content provided in two different image viewing windows.

### Summary of the Invention

In accordance with the teachings of the present invention, a display system having a multiple-view display and a method of controlling a multiple-view display are provided. According to one aspect of the present invention, a display system having multiple-view displays is provided that includes a display for generating a first image that is viewable within a first viewing window and a second image that is viewable within a second viewing window. The display system also includes a user manipulated input device adapted to allow a user to manually enter an input, and a sensor arrangement for sensing which user is manipulating the input device. The display system further includes a control device for controlling the first and second images shown on the display based on the sensed user manipulation.

According to another aspect of the present invention, a display system having a dual-view display is provided. The display system includes a display for generating a first image that is viewable within a first viewing window and a second image that is viewable within a second viewing window. A user manipulated input device is adapted to allow a user to manually enter an input. The display system includes a first sensor arranged to sense manipulation of the input device by a first user in the first viewing window, and a second sensor arranged to sense manipulation of the input device by a second user in the second viewing window. The display system further includes a control device for controlling the first and second images shown on the display based on the sensed one of the first and second users.

According to a further aspect of the present invention, a method of controlling a multiple-view display to allow user manipulation of the display by multiple users is provided. The method includes the steps of generating a first image on a display that is viewable within a first viewing window, and generating a second image on the display that is viewable within a second viewing window. The method also includes the steps of sensing a user manipulating a user manipulatable input device, and determining whether the sensed user is expected to be located within the first or second viewing windows. The method further includes the step of controlling the display of the first and second images based on the determination of which of the first and second viewing windows the user is expected to be located within.

The display system and method of the present invention allow for user manipulation of image content made available in at least two different viewing windows, such that image content relevant to another user may not be adversely affected. The system and method are particularly well-suited for use in a vehicle to allow viewing by multiple occupants within the vehicle.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
FIG. 1 is a forward view of a vehicle passenger compartment having an infotainment system equipped with a display system according to one embodiment of the present invention;
FIG. 2 is a left side front view of the infotainment system seen by the driver of the vehicle;
FIG. 3 is a right side front view of the infotainment system seen by a passenger in the vehicle;
FIG. 4 is a block diagram illustrating the display system with controls for controlling the image content according to one embodiment of the present invention;
FIG. 5 is an exploded view of the dual-view display and touch sensitive screen; and
FIG. 6 is a flow diagram illustrating a method of controlling the display system to control image content provided in the first and second viewing windows based on user input according to one embodiment.

### Description of the Preferred Embodiments

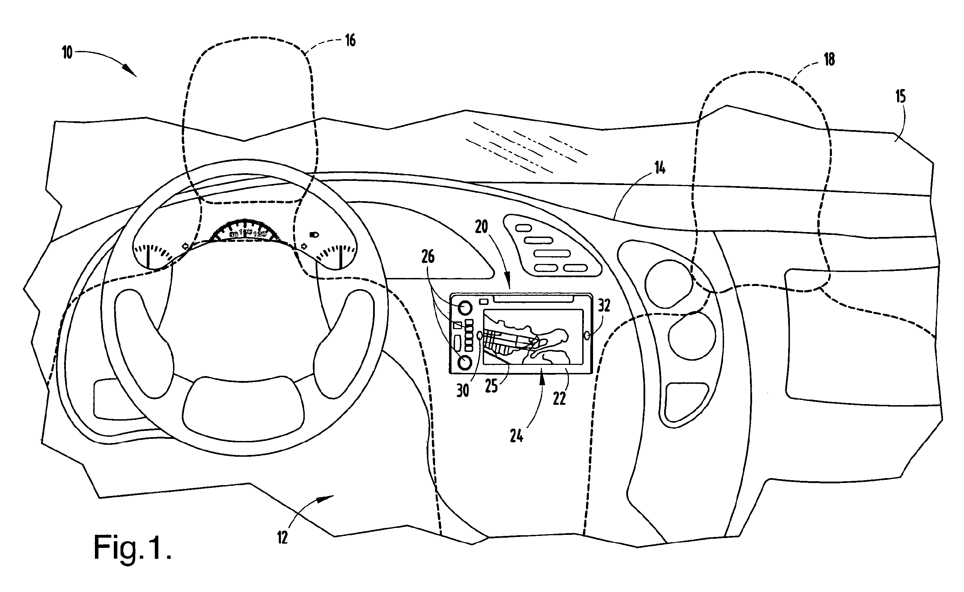

Referring to FIG. 1, the front passenger compartment 12 of a vehicle 10 is generally illustrated showing a driver 16 and a front passenger 18 seated in the vehicle 10. The passenger compartment 12 generally includes a dash 14 with various conventional devices, such as an instrument cluster located at the front of the passenger compartment, forward of the steering wheel and steering column. The dash 14 extends in front of both the driver 16 and front passenger 18 and is located below the front windshield 15.

Centrally mounted within the dash 14 in the front side of the passenger compartment is an electronic infotainment system 20 which is readily accessible to both a first user shown as the driver 16 of the vehicle 10 on the left side and a second user shown as the front passenger 18 on the right side. The infotainment system 20 is an electronic system which generally includes any of a variety of information, entertainment and multimedia systems commonly known in the art. For example, the infotainment system 20 may include any one or a combination of the following systems: an automotive personal computing device, a web browser, an Internet access device, a satellite communication system, a mobile multimedia system, a radio, a television, a DVD player, a video game player, a navigation system, and a phone/address book lookup system, and other types of electronic devices and systems.

The infotainment system 20 includes a human machine interface (HMI) for allowing occupants, including the driver 16 and front passenger 18 to interface with the infotainment system 20. The HMI includes a display system 24 for display images, including video images, text messages, and other content viewable within first and second viewing windows, according to one embodiment of the present invention. The display system 24 is mounted to a housing 22. The display system 24 has a dual-image display 25 that generates a first image readily viewable by the driver 16 on the left side in a first viewing window and simultaneously generates a second image readily viewable by a front passenger 18 on the right side in a second different viewing window. However, the display system 24 may include a display 25 providing any of a number of a plurality of viewing windows for generating image content that is viewable within the viewing windows and may vary from the image content of other viewing windows.

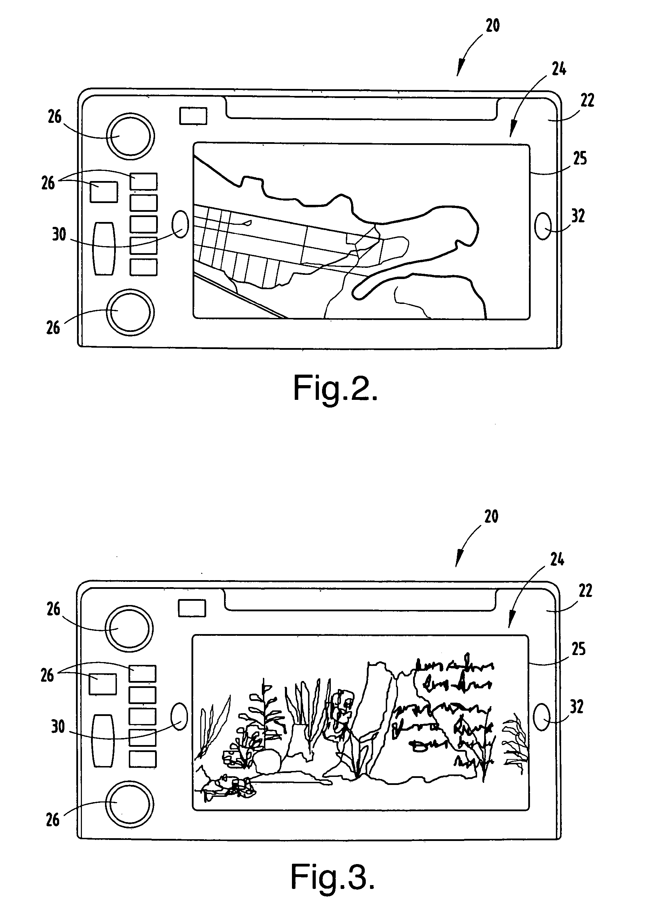

Referring to FIGS. 2 and 3, the infotainment system 20 is further illustrated as seen from the two different viewing windows. In FIG. 2, the display system 24 presents a first image in a first viewing window, such as a navigation map in a first viewing window, for viewing from the left or driver side of the vehicle. In FIG. 3, the display system 24 presents a second image, such as movie video, in a second viewing window for viewing from the right or passenger side of the vehicle. It should be appreciated that the first and second viewing windows presented in FIGS. 2 and 3 may be simultaneously displayed on the display system 24 to provide separate image content to the separate viewing windows.

The HMI of the infotainment system 20 is shown including various user manipulatable input controls 26 that may include pushbutton, rotary dial and other user actuated input controls. Additionally, the display system 24 includes touch screen user inputs on a touch sensitive display screen. The touch screen user inputs are user manipulatable such that a user may touch the touch sensitive screen to input commands to the display system 24.

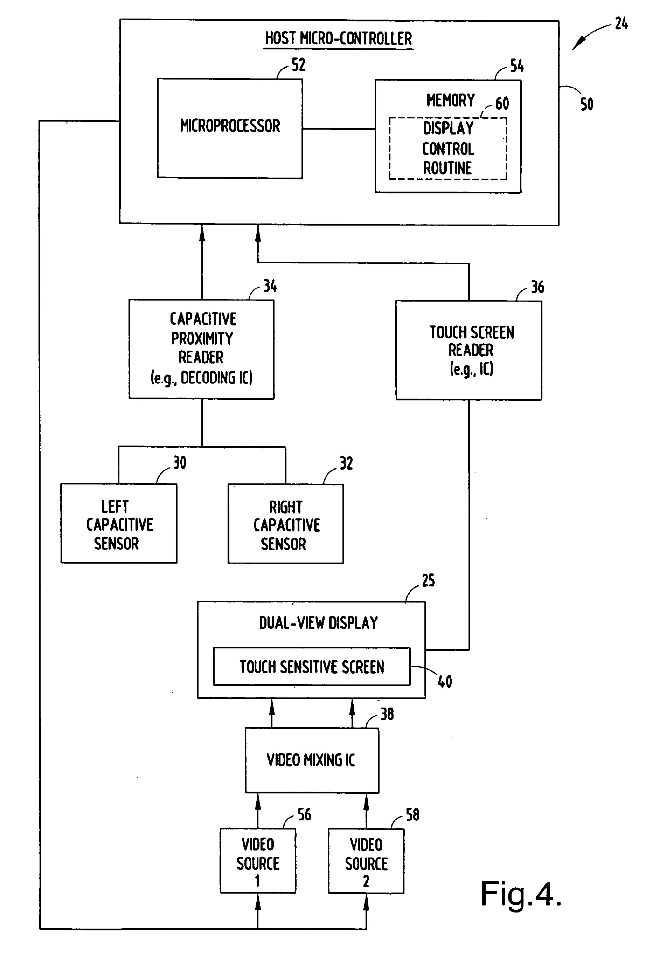

Referring to FIG. 4, the display system 24 according to one embodiment is generally illustrated having a dual-view display 25 with touch sensitive screen 40, a left capacitive sensor 30, a right capacitive sensor 32 and a host microcontroller 50. The host microcontroller 50 includes a microprocessor 52 and memory 54. Memory 54 contains routines including a display control routine 60 for processing sensed data and generating control signals to control any of a number of functions related to the display system. It should be appreciated that the host microcontroller 50 may include a dedicated controller or may be a shared controller performing any of a number of other functions.

The display system 24 also includes video mixing integrated circuitry (IC) 38 and first and second video sources 56 and 58. The first video source 56 generates a first video image containing the first image content. The second video source 58 generates the second image content. The video mixing integrated circuitry 38 receives the first and second image contents and provides the first and second image contents to the dual-view display 25 to be displayed in the first and second viewing windows, respectively.

The display system 24 further includes a touch screen reader 36 for detecting user manipulation of the touch sensitive screen 40. The touch screen reader 36 may be implemented as integrated circuitry (IC) or other known user input sensing device. The touch sensitive screen 40 allows the user to manipulate "soft" buttons that are displayed on the display screen. Examples of "soft" buttons may include navigation map centering functions, AM/FM radio functions/presets and other feature menu items.

The touch sensitive screen 40 may include a resistive panel according to one embodiment, wherein the touch screen reader 36 determines the location where the user finger is pressing against the screen. The touch screen reader 36 may include an integrated circuit configured to read the X and Y coordinates of the sensed pressure point on the screen and forward the X and Y coordinate information to the host microcontroller 50 for processing therein. Alternately, the touch screen reader 36 may be implemented in software or otherwise configured to sense "soft" buttons on the touch sensitive screen. According to other embodiments, the touch screen reader 36 may include an array of infrared transmitters and receivers that, once the screen 40 is touched or close to being touched, the infrared beam is broken in an X and Y direction and relayed back to the host microcontroller 50.

The display system 24 further includes a capacitive proximity reader 34 coupled to the left capacitive sensor 30 and right capacitive sensor 32. The capacitor proximity reader 34 may be implemented as a decoding integrated circuit, or otherwise configured to sense signal outputs from the left and right capacitive sensors 30 and 32 to establish the proximity of a user relative thereto. In one embodiment, the left and right capacitive sensors 30 and 32 comprise capacitive proximity circuits that measure a capacitive value from copper pads on a circuit board. The capacitive value has a magnitude that may vary based on proximity to a user. One example of an IC capacitive sensor is Model No. QT220, commercially available from Quantum Research Group.

The capacitive proximity reader 34 reads the capacitive value from each of the left and right capacitive sensors 30 and 32. The capacitor proximity reader 34 may also determine if the capacitive value of the left capacitive sensor is greater than the capacitor value of the right capacitive sensor 32, indicative that a left-side user event has occurred and provides an output signal to the microcontroller 50. If the capacitive value of the right capacitive sensor 32 is greater than the left capacitive sensor value, the capacitor proximity reader 34 sends an output signal to the host microcontroller 50 indicating that a right side user event occurred. According to other embodiments, the comparison of the capacitor values of the left and right capacitive sensors 30 and 32 and the determination as to which side a user manipulation has occurred may be determined elsewhere, such as in the host microcontroller 50.

In the embodiment shown, the proximity sensors employ capacitive sensors 30 and 32, located on opposite sides of the display 25 for sensing the user or the hand of the user in close proximity thereto to determine if the user is expected to be in the first or the second viewing windows. According to other embodiments, the presence of a user manipulating the input to the display system 24 may be detected using other in various configurations. For example, the left and right sensors may include optical sensors, light sensors, infrared sensors, or other sensing devices. While the sensors 30 and 32 are shown placed on the left and right sides of the display 25, the sensors 30 and 32 could be placed closer together or located at various locations on or off the infotainment system 20.

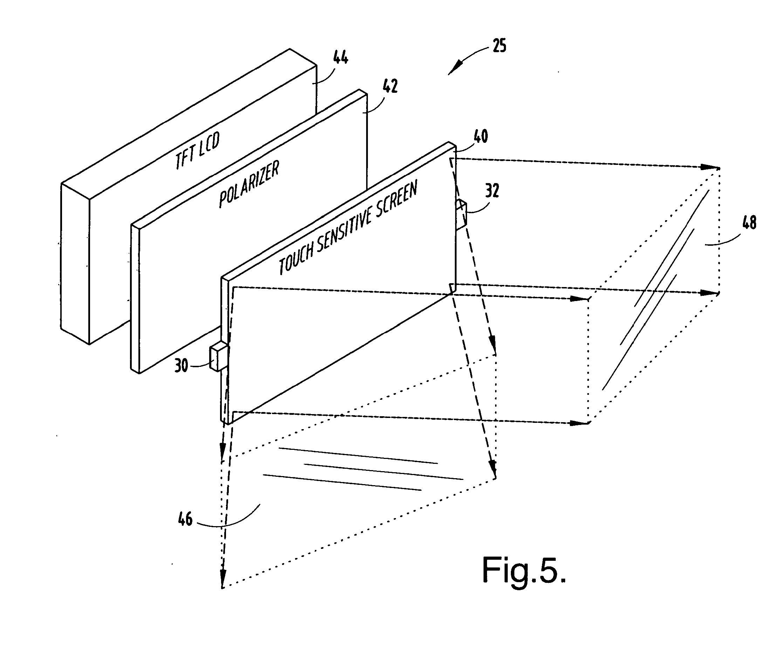

Referring to FIG. 5, one example of a dual-view display 24 is illustrated having an overlaying touch sensitive screen 40. The proximity sensors 30 and 32 are shown mounted on the left and right sides of the touch sensitive screen 40. The dual-view display 25 has a thin film transistor (TFT) liquid crystal display (LCD) 44, according to one embodiment. The LCD 44 generally includes a backlight and transistors configured to control the video pixels. Additionally, the dual-view display 25 includes a polarizer 42 disposed in front of the LCD 44 to cause the light from the backlight of the LCD 44 to separate into right and left directions within the first and second viewing windows. According to one example, the polarizer 42 may include a parallax barrier superimposed on the LCD 44. The resulting dual-view display 25 allows the first and second video images provided by video sources 56 and 58 to be presented on the LCD 44, and directed via polarizer 42 into first and second viewing windows shown by arrows 46 and 48. According to one example, the dual-view display 25 may include a seven inch (7") dual view display produced by Sharp Corporation. It should be appreciated that other types of displays may be employed to provide the dual-view image content.

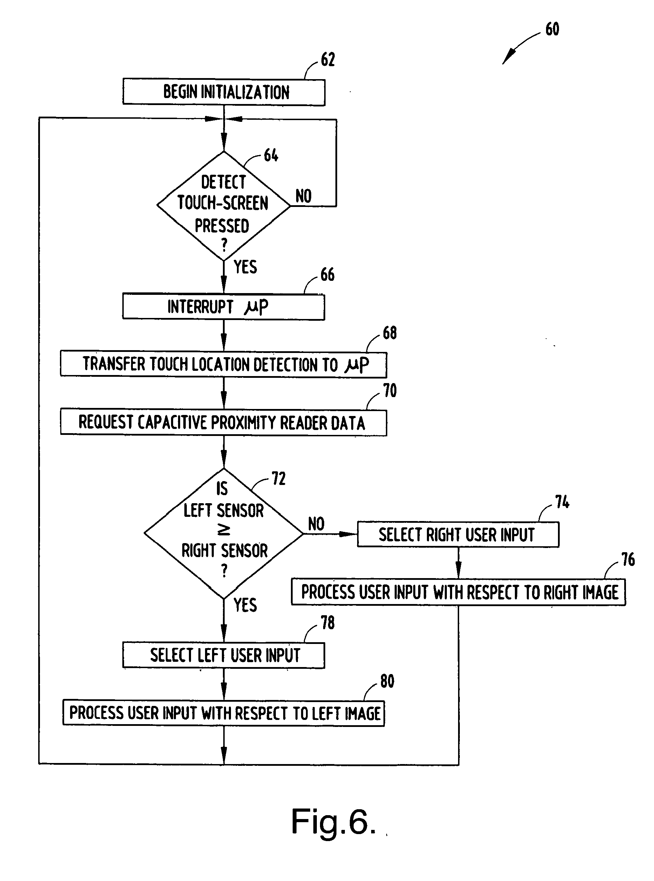

The display control routine 60 is illustrated in FIG. 6 according to one embodiment. The routine 60 begins with an initialization step 62. The initialization step 62 may include software calibrations that could happen at power-up or at specific time-sampled intervals. For example, if other objects are expected to be placed in close proximity to the display system, that could potentially interfere with the sensors, the microcontroller 50 could perform periodic calculations, such as every ten seconds, in order to be able to make an accurate determination of left or right side user detection by the left and right side sensors, respectively.

Following initialization, the routine 60 proceeds to step 64 to detect if the touch sensitive screen has been depressed. If the touch sensitive screen has been pressed, routine 60 proceeds to interrupt the microprocessor in step 66 and then transfers the touch location detection, such as the X and Y coordinates of the location of the touch on the screen, to the host microprocessor in step 68. Next, routine 60 requests the capacitive proximity reader data in step 70. The reader data is then compared to see if the left sensor data is greater than the right sensor data in decision step 72. If the left sensor data is determined to be greater than the right sensor data, routine 60 selects the left user input in step 78 and proceeds to process the user input with respect to the left image in step 80. If the left sensor is not determined to be greater than the right sensor data, routine 60 selects the right user input in step 74 and then proceeds to process the user input with respect to the right image in step 76.

Accordingly, the display control routine 60 detects which viewing window the user manipulating the touch sensitive screen is expected to be located within, based on the sensed proximity to the left and right detection sensors. It should be appreciated that other user inputs may be employed in addition to or in place of the touch sensitive screen. The sensed proximity data may then be used to control the image content provided in the first and second images to the respective first and second viewing windows. For example, the image content for a navigation system displayed to the driver of the vehicle may be modified such as to recenter the navigation map when the display system 20 detects a user is manipulating the touch sensitive screen to enter such a command. If a passenger is determined to be manipulating the touch sensitive screen, the second image content provided to the right side viewing window is controlled based on the user manipulated input command.

The display system 24 and method 60 advantageously allow for user manipulation of input content made available in two different viewing windows, such that the image content relevant to one user does not adversely affect the image content provided to another user. The display system 24 and method 60 are particularly well-suited for use in a vehicle 10 to allow viewing by multiple occupants within the vehicle 10, such as a driver 16 and passenger 18 of the vehicle 10. It should be appreciated that the display system 24 and method 60 may also be used to display image content to other passengers in the vehicle, such as passengers located in the rear seating area of a vehicle in a rear seat entertainment system. Further, the display system and method of the present invention may be employed in other environments outside of a vehicle, without departing from the teachings of the present invention.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A display system (24) having a multiple-view display, said display system comprising:
a display (25) for generating a first image that is viewable within a first viewing window and a second image that is viewable within a second viewing window;
a user manipulated input device (40) adapted to allow a user to manually enter an input;
a sensor arrangement (30, 32) for sensing which user is manipulating the input device (40); and
a control device (50) for controlling the first and second images shown on the display (25) based on the sensed user manipulation.

2. The display system as defined in claim 1, wherein the sensor arrangement comprises:
a first sensor (30) arranged to sense manipulation of the input device (40) by a user in expected to be the first viewing window; and
a second sensor (32) arranged to sense manipulation of the input device (40) by a user expected to be in the second viewing window.

3. The display system as defined in claim 2, wherein the first and second sensors (30 and 32) each comprise a capacitive proximity sensor.

4. The display system as defined in claim 2, wherein the first sensor (30) is located on one side of the display (25) in proximity to the first viewing window and the second sensor (32) is located on an opposite side of the display (25) in proximity with the second viewing window.

5. The display system as defined in claim 1, wherein the user input device (40) comprises a touch sensitive screen.

6. The display system as defined in claim 1, wherein the display (25) further comprises a first image generating device (56) for generating the first image and a second image generating device (58) for generating the second image, wherein the control device (50) controls one of the first and second image generating devices (56 and 58) responsive to a user entered input.

7. The display system as defined in claim 1, wherein the display system (24) is located in a vehicle (10).

8. The display system as defined in claim 7, wherein the display system (24) is arranged in the vehicle (10) such that the first image in the first viewing window is viewable by a driver (16) of the vehicle (10) and the second image in the second viewing window is viewable by a passenger (18) in the vehicle (10).

9. The display system as defined in claim 8, wherein the display system (24) is a dual-view display.

10. A method (60) of controlling a multiple-view display (25) to allow user manipulation of the display (25) by multiple users, said method comprising the steps of:
generating a first image on a display (25) that is viewable within a first viewing window;
generating a second image on the display (25) that is viewable within a second viewing window;
sensing (64) a user manipulating a user manipulatable input device (40);
determining (72) whether the sensed user is expected to be located within the first viewing window or the second viewing window; and
controlling (80) the display of the first and second images based on the determination of which of the first and second viewing windows the user is expected to be located within.

11. The method as defined in claim 10, wherein the method is employed on the vehicle (10) to provide the first viewing window for viewing by a first occupant (16) in the vehicle (10) and the second viewing window is provided for viewing by a second occupant (18) in the vehicle (10).

12. The method as defined in claim 11, wherein the first occupant in the vehicle (10) is the driver (16) of the vehicle and the second occupant in the vehicle is a passenger (18) in the vehicle.

13. The method as defined in claim 10, wherein the step of sensing user manipulation of the input device comprises:
sensing with a first sensor (30) the presence of a first user expected to be in the first viewing window; and
sensing with a second sensor (32) the presence of a second user expected to be in the second viewing window.

14. The method as defined in claim 10, wherein the input device (40) comprises a touch sensitive screen.
